(19) Europäisches Patentamt / European Patent Office / Office européen des brevets

(11) EP 3 898 831 B1

(12) **FASCICULE DE BREVET EUROPEEN**

(45) Date de publication et mention de la délivrance du brevet:
**08.02.2023 Bulletin 2023/06**

(21) Numéro de dépôt: **19849027.8**

(22) Date de dépôt: **13.12.2019**

(51) Classification Internationale des Brevets (IPC):
***C08L 23/08*** *(1974.07)* ***C08F 8/42*** *(1974.07)*
***C08F 210/02*** *(1974.07)* ***B60C 1/00*** *(1968.09)*
***C08L 23/36*** *(1974.07)* ***C08K 3/36*** *(1974.07)*
***C08L 45/00*** *(1974.07)* ***C08L 91/00*** *(1974.07)*

(52) Classification Coopérative des Brevets (CPC):
(C-Sets disponibles)
**B60C 1/0016; C08F 8/30; C08F 8/42; C08F 210/02; C08L 23/083; C08L 23/36;** Y02T 10/86 (Cont.)

(86) Numéro de dépôt international:
**PCT/FR2019/053053**

(87) Numéro de publication internationale:
**WO 2020/128250 (25.06.2020 Gazette 2020/26)**

(54) **COMPOSITION DE CAOUTCHOUC**

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873920**

(43) Date de publication de la demande:
**27.10.2021 Bulletin 2021/43**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
**63040 CLERMONT-FERRAND Cedex 9 (FR)**
- **CROCHET, Aurore**
**63040 CLERMONT-FERRAND Cedex 9 (FR)**
- **HENNEBERT, Guillaume**
**63040 CLERMONT-FERRAND Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-02/072689 FR-A1- 3 001 223**
**FR-A1- 3 067 355**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 898 831 B1

(52) Classification Coopérative des Brevets (CPC): (Cont.)

C-Sets
**C08F 8/30, C08F 210/02;**
**C08F 8/42, C08F 210/02;**
**C08F 210/02, C08F 4/52;**
**C08L 23/083, C08L 91/00, C08L 45/00, C08L 91/06, C08K 3/04, C08K 3/36, C08K 5/18, C08K 5/548, C08K 5/09, C08K 3/22, C08K 5/31, C08K 5/47, C08K 5/40;**
**C08L 23/36, C08L 91/00, C08L 45/00, C08L 91/06, C08K 3/04, C08K 3/36, C08K 5/18, C08K 5/548, C08K 5/09, C08K 3/22, C08K 5/31, C08K 5/47, C08K 5/40**

## Description

Le domaine de la présente invention est celui des compositions de caoutchouc renforcées qui comprennent une silice et un élastomère copolymère de diène conjugué et d'éthylène et qui sont destinées à être utilisé dans un pneumatique, plus particulièrement dans la bande de roulement d'un pneumatique.

De manière connue, un pneumatique comporte un sommet prolongé par deux flancs et deux bourrelets destinés à entrer en contact avec une jante, une armature de carcasse ancrée dans les deux bourrelets, une armature de sommet et une bande de roulement destinée à entrer en contact avec le sol.

Un pneumatique doit obéir à un grand nombre d'exigences techniques, souvent antinomiques, parmi lesquelles une résistance élevée à l'usure, une faible résistance au roulement, une adhérence élevée.

Ce compromis de performances, en particulier du point de vue de la résistance au roulement et de la résistance à l'usure, a pu être amélioré grâce notamment à l'emploi comme bande de roulement de compositions de caoutchouc faiblement hystérétiques ayant pour caractéristique d'être renforcées majoritairement de silices hautement dispersibles dites « HDS » (Highly Dispersible Silica »), capables de rivaliser, du point de vue pouvoir renforçant, avec les noirs de carbone conventionnels de grade pneumatique.

Le compromis de performance entre la résistance au roulement et la résistance à l'usure des bandes de roulement a pu être aussi amélioré grâce à l'introduction dans une composition de caoutchouc d'un copolymère d'éthylène et de 1,3-butadiène contenant plus de 50% en mole d'unité éthylène. On peut par exemple se référer à la demande de brevet WO 2014114607 A1. Mais une telle composition ne permet pas de conférer à la bande de roulement une performance d'adhérence optimale, notamment pour un véhicule de tourisme.

Il est connu que la performance d'adhérence d'un pneumatique peut être améliorée en augmentant la surface de contact de la bande de roulement sur le sol de roulage. Une solution consiste à utiliser une bande de roulement très déformable, notamment une composition de caoutchouc très molle qui constitue la surface de la bande de roulement destinée à entrer au contact de la surface de roulage. L'utilisation d'une composition de caoutchouc très molle, pourtant favorable pour l'adhérence, peut entraîner une dégradation du comportement routier du pneumatique.

Pour améliorer le comportement routier, on le sait, une rigidité supérieure de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement. Mais généralement, ces solutions ne sont pas toujours satisfaisantes, car elles peuvent s'accompagner d'une dégradation de la résistance au roulement.

Pour satisfaire à ces deux exigences contradictoires que sont le comportement routier et l'adhérence, une solution consiste aussi à créer un gradient de rigidité par un phénomène d'accommodation de la composition de caoutchouc de la bande de roulement comme cela est décrit dans les demandes de brevet WO 02/10269 et WO 2012084599. Ce phénomène d'accommodation se traduit par l'aptitude de la composition de caoutchouc à devenir moins rigide en surface de la bande de roulement sous l'effet des déformations subies par la bande de roulement au cours du roulage du pneumatique. Cette diminution de la rigidité à la surface de la bande de roulement, ne se produit pas ou très peu à l'intérieur de la bande de roulement qui conserve ainsi un niveau de rigidité plus élevé que la surface de la bande de roulement.

Ces solutions techniques pour améliorer les performances d'adhérence, de comportement routier et de résistance au roulement ont été décrites généralement pour des élastomères diéniques fortement insaturés qui sont caractérisés par un taux molaire de diène très supérieur à 50%.

Il est décrit dans la demande de brevet JP 2013-185048 une composition de caoutchouc comprenant un copolymère d'éthylène et de 1,3-butadiène dont la processabilité est améliorée par l'introduction de 5 à 10 pce d'une résine plastifiante. Non seulement la teneur molaire en éthylène dans le copolymère est très inférieure à 50%, mais aussi la performance d'adhérence n'est pas traitée.

Pour l'utilisation de copolymères de diène conjugué contenant des taux molaires d'éthylène supérieurs à 50% dans des compositions de caoutchouc pour bande de roulement de pneumatique, il existe donc un intérêt et un besoin d'améliorer aussi la performance d'adhérence de la bande de roulement.

Poursuivant ses efforts, la Demanderesse a découvert que l'utilisation combinée d'un élastomère diénique fortement saturé et d'un système plastifiant spécifique dans une composition de caoutchouc pour bande de roulement d'un pneumatique permet d'améliorer la performance d'adhérence du pneumatique. Des modes de réalisation particuliers de l'invention contribuent même à améliorer le compromis de performance entre l'adhérence et la résistance au roulement. D'autres modes de réalisation particuliers de l'invention permettent d'améliorer aussi le compromis de performance entre l'adhérence et le comportement routier.

Ainsi un premier objet de l'invention est une composition de caoutchouc qui comprend :

- un élastomère qui est un copolymère d'éthylène et d'un 1,3-diène qui comprend des unités éthylène qui représentent plus de 50% en moles des unités monomères du copolymère, le 1,3-diène étant le 1,3-butadiène ou l'isoprène,

- 35 à 100 parties en poids pour cent parties d'élastomère, pce, d'une charge renforçante qui comprend une silice,
- un système plastifiant comprenant une résine plastifiante hydrocarbonée et un agent plastifiant liquide hydrocarboné, étant entendu que le taux total de résine plastifiante hydrocarbonée et d'agent plastifiant liquide hydrocarboné est supérieur à 10 pce et inférieur ou égal à 80 pce.

Un autre objet de l'invention est un pneumatique comportant un sommet prolongé par deux flancs et deux bourrelets, une armature de carcasse ancrée dans les deux bourrelets, une armature de sommet et une bande de roulement radialement extérieure à ladite armature de sommet, lequel pneumatique comprend une composition de caoutchouc selon l'invention dans la bande de roulement.

## Description détaillée

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties en poids d'élastomère (du total des élastomères si plusieurs élastomères sont présents).

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base des unités monomères du copolymère, c'est-à-dire de l'ensemble des unités monomères de l'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans ce qui suit, la direction radiale désigne une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend deux bourrelets, destinés à assurer une liaison mécanique entre le pneumatique et la jante sur laquelle il est monté, un sommet composé d'au moins une armature de sommet et une bande de roulement et prolongé par deux flancs. La bande de roulement, destinée à entrer en contact avec le sol et reliée par les deux flancs, est radialement extérieure à ladite armature de sommet. Le pneumatique comprend aussi une armature de renforcement ancrée dans les deux bourrelets, dite armature de carcasse, qui est radialement intérieure à ladite armature de sommet.

Le copolymère d'éthylène et de 1,3-diène utile aux besoins de l'invention, est un élastomère de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. Dans le copolymère d'éthylène et de 1,3-diène, les unités éthylène représentent plus de 50% en mole des unités monomères du copolymère. De préférence, les unités éthylène dans le copolymère représentent plus de 60%, avantageusement plus de 70% en mole des unités monomères du copolymère. Selon l'un quelconque des modes de réalisation de l'invention, y compris leurs variantes préférentielles, l'élastomère diénique fortement saturé comprend préférentiellement au plus 90% en mole d'unité éthylène.

Le copolymère utile aux besoins de l'invention, également désigné ci-après par l'élastomère diénique fortement saturé, comprend aussi des unités 1,3-diène résultant de la polymérisation d'un 1,3-diène, le 1,3-diène étant le 1,3-butadiène ou l'isoprène. De manière connue, l'expression « unité 1,3-diène » fait référence aux unités résultant de l'insertion du 1,3-diène par une addition 1,4, une addition 1,2 ou une addition 3,4 dans le cas de l'isoprène. De préférence, le 1,3-diène est le 1,3-butadiène.

Selon un premier mode de réalisation de l'invention, le copolymère d'éthylène et d'un 1,3-diène contient des unités de formule (I). La présence de motif cyclique saturé à 6 membres, 1,2-cyclohexanediyle, de formule (I) comme unité monomère dans le copolymère peut résulter d'une série d'insertions très particulières de l'éthylène et du 1,3-butadiène dans la chaîne polymère au cours de sa croissance.

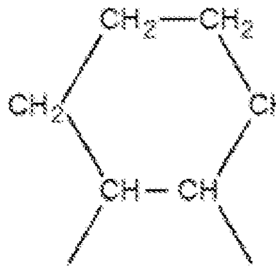

(I)

Selon un deuxième mode de réalisation préférentiel de l'invention, le copolymère d'éthylène et d'un 1,3-diène contient des unités de formule (II-1) ou (II-2).

$-CH_2-CH(CH=CH_2)-$ (II-1)

$-CH_2-CH(\underline{CMe}=CH_2)$ (II-2)

Selon un troisième mode de réalisation préférentiel de l'invention, le copolymère d'éthylène et d'un 1,3-diène contient des unités de formule (I) et de formule (II-1).

Selon un quatrième mode de réalisation de l'invention, l'élastomère diénique fortement saturé est dépourvu d'unités de formule (I). Selon ce quatrième mode de réalisation, le copolymère d'éthylène et d'un 1,3-diène contient de préférence des unités de formule (II-1) ou (II-2).

De préférence, l'élastomère diénique fortement saturé contient des unités résultant de l'insertion du 1,3-diène par une addition 1,4, c'est-à-dire des unités de formule $-CH_2-CH=CH-CH_2-$ lorsque le 1,3-diène est le 1,3-butadiène ou de formule $-CH_2-CMe=C-CH_2-$ lorsque le 1,3-diène est l'isoprène.

Lorsque l'élastomère diénique fortement saturé comprend des unités de formule (I) ou des unités de formule (II-1) ou encore comprend des unités de formule (I) et des unités de formule (II-1), les pourcentages molaires des unités de formule (I) et des unités de formule (II-1) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \text{ (eq. 1)}$$

$$0 < o+p < 20 \text{ (eq. 2)}$$

Selon le premier mode de réalisation, selon le deuxième mode de réalisation de l'invention, selon le troisième mode de réalisation et selon le quatrième mode de réalisation, y compris leurs variantes préférentielles, l'élastomère diénique fortement saturé est préférentiellement un copolymère statistique.

L'élastomère diénique fortement saturé, en particulier selon le premier mode de réalisation, selon le deuxième mode de réalisation, selon le troisième mode de réalisation et selon le quatrième mode de réalisation, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé peut être constitué d'un mélange de copolymères d'éthylène et de 1,3-diène qui se différencient les uns des autres par leurs microstructures ou par leurs macrostructures.

Selon le premier mode de réalisation de l'invention, selon le deuxième mode de réalisation de l'invention, selon le troisième mode de réalisation et selon le quatrième mode de réalisation, l'élastomère diénique fortement saturé est de préférence un copolymère d'éthylène et de 1,3-butadiène, de manière plus préférentielle un copolymère d'éthylène et de 1,3-butadiène statistique.

Selon un mode de réalisation particulier de l'invention, le copolymère d'éthylène et d'un 1,3-diène porte en

extrémité de chaîne un groupe fonctionnel $F^1$ qui est une fonction silanol ou alcoxysilane. Ce mode de réalisation est aussi favorable à l'amélioration de la résistance au roulement.

Selon ce mode de réalisation, la fonction silanol ou alcoxysilane est située en extrémité de la chaîne de l'élastomère diénique fortement saturé. Dans la présente demande, la fonction alcoxysilane ou silanol portée en une des extrémités est désignée dans la présente demande par l'appellation le groupe fonctionnel $F^1$. De préférence, elle est attachée directement par une liaison covalente à l'unité terminale de l'élastomère diénique fortement saturé, ce qui revient à dire que l'atome de silicium de la fonction est lié directement de façon covalente à un atome de carbone de l'unité terminale de l'élastomère diénique fortement saturé. L'unité terminale à laquelle est directement attaché le groupe fonctionnel $F^1$ est de préférence constituée d'un méthylène lié à une unité éthylène ou à une unité 1,2-cyclohexanediyle, de formule (I), l'atome Si étant lié au méthylène. Par unité terminale, on entend la dernière unité insérée dans la chaîne copolymère par copolymérisation, unité qui est précédée de l'unité pénultième, elle-même précédée de l'unité antepénultième.

Selon une première variante de ce mode, le groupe fonctionnel $F^1$ est de formule (III-a)

$$Si(OR^1)_{3-f}(R^2)_f \qquad \text{(III-a)}$$

les symboles $R^1$, identiques ou différents, représentant un alkyle,

les symboles $R^2$, identiques ou différents, représentant un atome d'hydrogène, une chaîne hydrocarbonée ou une chaîne hydrocarbonée substituée par une fonction chimique $F^2$,
f étant un nombre entier allant de 0 à 2.

Dans la formule (III-a), les symboles $R^1$ sont préférentiellement un alkyle ayant au plus 6 atomes de carbone, plus préférentiellement un méthyle ou un éthyle, encore plus préférentiellement un méthyle. Si 3-f est supérieur à 1, les symboles $R^1$ sont avantageusement identiques, en particulier méthyle ou éthyle, plus particulièrement méthyle.

Selon une deuxième variante de ce mode, le groupe fonctionnel $F^1$ est de formule (III-b)

$$Si(OH)(R^2)_2 \qquad \text{(III-b)}$$

les symboles $R^2$, identiques ou différents, représentant un atome d'hydrogène, une chaîne hydrocarbonée ou une chaîne hydrocarbonée substituée par une fonction chimique $F^2$.

Parmi les chaînes hydrocarbonées représentée par les symboles $R^2$ dans les formules (III-a) et (III-b ), on peut citer les alkyles, notamment ceux ayant 1 à 6 atomes de carbone, préférentiellement méthyle ou éthyle, plus préférentiellement méthyle.

Parmi les chaînes hydrocarbonées substituées par une fonction chimique $F^2$ représentée par les symboles $R^2$ dans les formules (III-a) et (III-b), on peut citer les chaînes alcanediyles, notamment celles comportant au plus 6 atomes de carbone, tout particulièrement le groupe 1,3-propanediyle, le groupe alcanediyle portant un substituant, la fonction chimique $F^2$ , autrement dit, une valence de la chaîne alcanediyle pour la fonction $F^2$, l'autre valence pour l'atome de silicium de la fonction silanol ou alcoxysilane.

Dans les formules (III-a) et (III-b), on entend par fonction chimique $F^2$ un groupe qui est différent d'un groupe hydrocarboné saturé et qui peut participer à des réactions chimiques. Parmi les fonctions chimiques qui peuvent convenir, on peut citer la fonction éther, la fonction thioéther, la fonction amine primaire, secondaire ou tertiaire, la fonction thiol, la fonction silyle. Les fonctions amine primaire ou secondaire ou thiol peuvent être protégées ou ne pas être protégées. Le groupe protecteur des fonctions amine et thiol est par exemple un groupe silyle, en particulier triméthylsilyle ou terbutyldiméthylsilyle. De préférence, la fonction chimique $F^2$ est une fonction amine primaire, secondaire, tertiaire ou une fonction thiol, la fonction amine primaire, secondaire ou thiol étant protégée ou non par un groupe protecteur.

De préférence, les symboles $R^2$, identiques ou différents, représentent un alkyle ayant au plus 6 atomes de carbone ou une chaîne alcanediyle ayant au plus 6 atomes de carbone et substituée par une fonction chimique $F^2$ dans les formules (III-a) et (III-b).

A titre de groupe fonctionnel $F^1$, on peut citer les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle, méthoxydiméthylsilyle, méthoxydiéthylsilyle, éthoxydiméthysilyle, éthoxydiéthysilyle, 3-(N,N-diméthylamino)propylméthoxyméthylsilyle, 3-(N,N-diméthylamino)propylméthoxy-éthylsilyle, 3-(N,N-diméthylamino)propyléthoxyméthylsilyle, 3-(N,N-diméthylamino)propyl-éthoxyéthylsilyle, 3-aminopropylméthoxyméthylsilyle, 3-aminopropylméthoxyéthylsilyle, 3-aminopropyléthoxyméthylsilyle, 3-aminopropyléthoxyéthylsilyle, 3-thiopropylméthoxy-méthylsilyle, 3-thiopropyléthoxyméthylsilyle, 3-thiopropylméthoxyéthylsilyle, 3-thiopropyléthoxyéthylsilyle.

A titre de groupe fonctionnel $F^1$, on peut aussi citer la forme silanol des groupes fonctionnels précédemment

cités qui contiennent une et une seule (*en anglais* « one ») fonction éthoxy ou méthoxy, la forme silanol pouvant être obtenue par hydrolyse de la fonction éthoxy ou méthoxy. A ce titre conviennent les groupes diméthylsilanol, diéthylsilanol, 3-(N,N-diméthylamino)propylméthylsilanol, 3-(N,N-diméthylamino)propyléthylsilanol, 3-aminopropylméthylsilanol, 3-aminopropyléthylsilanol, 3-thiopropyléthyl-silanol, 3-thiopropylméthylsilanol.

A titre de groupe fonctionnel $F^1$, on peut également citer les groupes fonctionnels qu'ils soient sous la forme alcoxy ou silanol, qui ont été précédemment cités et qui comportent une fonction amine ou thiol sous une forme protégée par un groupe silyle, en particulier triméthylsilyle ou terbutyldiméthylsilyle.

De préférence, le groupe fonctionnel $F^1$ est de formule (III-a) dans laquelle f est égal à 1. Pour cette variante préférentielle, conviennent tout particulièrement les groupes pour lesquels $R^1$ est un méthyle ou un éthyle, comme par exemple les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyl-diéthoxysilyle, 3-thiopropyldiméthoxysilyle, 3-thiopropyldiéthoxysilyle. Conviennent aussi les formes protégées de la fonction amine ou thiol des 4 derniers groupes fonctionnels cités dans la liste précédente par un groupe silyle, en particulier triméthylsilyle ou terbutyldiméthylsilyle.

De manière plus préférentielle, le groupe fonctionnel $F^1$ est de formule (III-a) dans laquelle f vaut 1 et $R^1$ est un méthyle. Pour cette variante plus préférentielle, conviennent tout particulièrement les groupes diméthoxyméthylsilyle, diméthoxyéthylsilyle, 3-(N,N-diméthylamino)propyldiméthoxysilyle, 3-aminopropyldiméthoxysilyle, 3-thiopropyldiméthoxysilyle, ainsi que les formes protégées de la fonction amine ou thiol du 3-aminopropyldiméthoxysilyle ou 3-thiopropyldiméthoxysilyle par un triméthylsilyle ou un terbutyldiméthylsilyle.

Le copolymère d'éthylène et d'un 1,3-diène qui porte en extrémité de chaîne un groupe fonctionnel $F^1$, fonction silanol ou alcoxysilane, peut être préparé par le procédé décrit dans la demande de brevet déposée sous le numéro PCT/FR2018/051305 ou dans la demande de brevet déposée sous le numéro PCT/FR2018/051306, lequel procédé comprend les étapes (a) et (b), et le cas échéant l'étape (c) suivantes :

(a) la copolymérisation d'un mélange monomère en présence d'un système catalytique comprenant un organomagnésien et un métallocène,
(b) la réaction d'un agent de fonctionnalisation avec le polymère obtenu à l'étape a),
(c) le cas échéant une réaction d'hydrolyse.

L'étape a) est commune à l'étape de copolymérisation mise en oeuvre pour préparer les copolymères homologues non fonctionnels décrits précédemment à la différence près que la réaction de copolymérisation est suivie d'une réaction de fonctionnalisation du copolymère, l'étape b).

L'étape b) consiste à faire réagir un agent de fonctionnalisation avec le copolymère obtenu à l'étape a) pour fonctionnaliser en extrémité de chaîne le copolymère. L'agent de fonctionnalisation est un composé de formule (IV),

$$Si(Fc^1)_{4-g}(Rc^2)_g \qquad (IV)$$

les symboles $Fc^1$, identiques ou différents, représentant un groupe alcoxy ou un atome d'halogène,

les symboles $Rc^2$, identiques ou différents, représentant un atome d'hydrogène, une chaîne hydrocarbonée ou une chaîne hydrocarbonée substituée par une fonction chimique $Fc^2$,
g étant un nombre entier allant de 0 à 2.

Lorsque le symbole $Fc^1$ représente un groupe alcoxy, le groupe alcoxy est de préférence méthoxy ou éthoxy. Lorsque le symbole $Fc^1$ représente un atome d'halogène, l'atome d'halogène est de préférence le chlore.

L'agent de fonctionnalisation peut être de formule (IV-1), de formule (IV-2), de formule (IV-3) ou de formule (IV-4),

$$MeOSi(Fc^1)_{3-g}(Rc^2)_g \qquad (IV-1)$$

$$(MeO)_2Si(Fc^1)_{2-g}(Rc^2)_g \qquad (IV-2)$$

$$(MeO)_3Si(Fc^1)_{1-g}(Rc^2)_g \qquad (IV-3)$$

$$(MeO)_3SiRc^2 \qquad (IV-4),$$

dans lesquelles les symboles $Fc^1$ et $Rc^2$ étant tels que définis dans la formule (IV)

pour la formule (IV-1) et (IV-2), g étant un nombre entier allant de 0 à 2,

pour la formule (IV-3), g étant un nombre entier allant de 0 à 1.

Parmi les chaînes hydrocarbonées représentée par les symboles $Rc^2$ dans les formules (III), (IV-1), (IV-2), (IV-3) et (IV-4), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique $Fc^2$ qui sont représentée par les symboles $Rc^2$ dans les formules (IV), (IV-1), (IV-2), (IV-3) et (IV-4), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique $Fc^2$, autrement dit une valence de la chaîne alcanediyle pour la fonction $F^2$, l'autre valence pour l'atome de silicium de la fonction silanol ou alcoxysilane.

Dans les formules (IV), (IV-1), (IV-2), (IV-3) et (IV-4), on entend par fonction chimique un groupe qui est différent d'un groupe hydrocarboné saturé et qui peut participer à des réactions chimiques. L'homme du métier comprend que la fonction chimique $Fc^2$ est un groupe chimiquement inerte vis-à-vis des espèces chimiques présentes dans le milieu de polymérisation. La fonction chimique $Fc^2$ peut être sous une forme protégée, comme par exemple dans le cas de la fonction amine primaire, amine secondaire ou thiol. A titre de fonction chimique $Fc^2$, peuvent être citées les fonctions éther, thioéther, amine primaire protégée, amine secondaire protégée, amine tertiaire, thiol protégé, silyle. De préférence, la fonction chimique $Fc^2$ est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

g est de préférence différent de 0, ce qui implique que l'agent de fonctionnalisation comprend au moins une liaison Si-$Rc^2$.

A titre d'agent de fonctionnalisation, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyldiéthoxysilane, 3-méthoxy-3,8,8,9,9-pentaméthyl-2-oxa-7-thia-3,8-disiladecane, triméthoxyméthylsilane, triéthoxyméthylsilane, triméthoxyéthylsilane, triéthoxyéthylsilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

L'agent de fonctionnalisation est ajouté typiquement au milieu de polymérisation résultant de l'étape a). Il est typiquement ajouté au milieu de polymérisation à un taux de conversion des monomères choisi par l'homme du métier selon la macrostructure souhaitée de l'élastomère. L'étape a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0,25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0,01 à 24 heures.

Une fois fonctionnalisé, l'élastomère peut être récupéré, notamment en l'isolant du milieu réactionnel. Les techniques pour séparer l'élastomère du milieu réactionnel sont bien connues de l'homme du métier et choisies par l'homme du métier selon la quantité d'élastomère à séparer, sa macrostructure et les outils mis à dispositions de l'homme du métier. Peuvent être cités par exemple les techniques de coagulation de l'élastomère dans un solvant tel que le méthanol, les techniques d'évaporation du solvant du milieu réactionnel et des monomères résiduels, par exemple sous pression réduite.

Lorsque l'agent de fonctionnalisation est de formule (IV), (IV-1) ou (IV-2) et g est égal à 2, l'étape b) peut être suivie d'une réaction d'hydrolyse pour former un élastomère portant en extrémité de chaîne une fonction silanol. L'hydrolyse peut être conduite par une étape de stripping de la solution contenant l'élastomère à l'issue de l'étape b), de manière connue par l'homme du métier.

Lorsque l'agent de fonctionnalisation est de formule (IV), (IV-1), (IV-2), (IV-3) ou (IV-4), que g est différent de 0 et que $Rc^2$ représente une chaîne hydrocarbonée substituée par une fonction $Fc^2$ sous une forme protégée, l'étape b) peut être aussi suivie d'une réaction d'hydrolyse pour déprotéger la fonction en extrémité de la chaîne de l'élastomère.

La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine ou thiol peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape c) est une étape optionnelle selon que l'on souhaite transformer ou non le groupe fonctionnel en fonction silanol ou que l'on souhaite déprotéger ou non la fonction protégée. Préférentiellement, l'étape c) est conduite avant de séparer l'élastomère du milieu réactionnel à l'issue de l'étape b) ou bien simultanément à cette étape de séparation.

Qu'il porte une fonction, silanol ou alcoxysilane, ou non, le taux du copolymère d'éthylène et d'un 1,3-diène est préférentiellement supérieur à 50 pce, plus préférentiellement supérieure à 80 pce. Le complément à 100 pce peut être tout élastomère diénique, par exemple un homopolymère ou un copolymère de 1,3-butadiène ou encore un homopolymère ou un copolymère d'isoprène. Selon l'un quelconque des modes de réalisation de l'invention, le taux du copolymère d'éthylène et d'un 1,3-diène est avantageusement de 100 pce. Un taux élevé en le copolymère dans la composition de caoutchouc est encore plus favorable pour le compromis de performance entre la résistance au roulement et l'adhérence.

La composition de caoutchouc conforme à l'invention a pour autre caractéristique essentielle de comprendre une charge renforçante comprenant une silice.

Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le taux de charge renforçante dans la composition de caoutchouc est supérieur ou égal à 35 pce et inférieur ou égal à 100 pce, de préférence supérieur ou égal à 50 pce et inférieur ou égal à 100 pce. De préférence, la silice représente plus de 50% en masse de la charge renforçante. De manière plus préférentielle, la silice représente plus de 85% en masse de la charge renforçante.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17].

Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR», « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés.

De préférence, le noir de carbone est utilisé à un taux inférieur ou égal à 20 pce, plus préférentiellement inférieur ou égal à 10 pce (par exemple le taux de noir de carbone peut être compris dans un domaine allant de 0,5 à 20 pce, notamment allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

Pour coupler la charge inorganique renforçante, en l'espèce la silice, à l'élastomère, on peut utiliser de manière

bien connue un agent de couplage (ou agent de liaison) au moins bifonctionnel destiné à assurer une connexion suffisante, de nature chimique et/ou physique, entre la charge inorganique (surface de ses particules) et l'élastomère, auquel cas la composition de caoutchouc comprend un agent de couplage pour lier la silice à l'élastomère. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère.

On utilise notamment des silanes polysulfurés, dits « symétriques » ou « asymétriques » selon leur structure particulière, tels que décrits par exemple dans les demandes WO03/002648-A1 (ou US2005/016651-A1) et WO03/002649-A1 (ou US2005/016650-A1). Conviennent en particulier, sans que la définition ci-après soit limitative, des silanes polysulfurés répondant à la formule générale (V) suivante:

$$Z - A - S_x - A - Z \qquad (V),$$

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en un alkylène en $C_1$-$C_4$, en particulier le propylène) ;
- les symboles Z, identiques ou différents, répondent à l'une des trois formules ci-après:

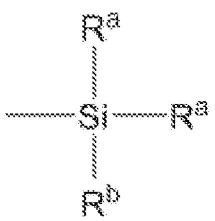
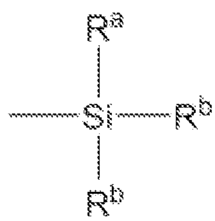
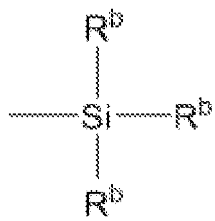

dans lesquelles :

- les radicaux $R^a$, substitués ou non substitués, identiques ou différents entre eux, représentent un groupe alkyle en $C_1$-$C_{18}$, un groupe cycloalkyle en $C_5$-$C_{18}$ ou un groupe aryle en $C_6$-$C_{18}$ (de préférence des groupes alkyle en $C_1$-$C_6$, le cyclohexyle ou le phényle, notamment des groupes alkyle en $C_1$-$C_4$, plus particulièrement le méthyle et/ou l'éthyle).
- les radicaux $R^b$, substitués ou non substitués, identiques ou différents entre eux, représentent un groupe alkoxyle en $C_1$-$C_{18}$ ou un groupe cycloalkoxyle en $C_5$-$C_{18}$ (de préférence un groupe choisi parmi les alkoxyles en $C_1$-$C_8$ et les cycloalkoxyles en $C_5$-$C_8$, plus préférentiellement encore un groupe choisi parmi les alkoxyles en $C_1$-$C_4$, en particulier le méthoxyle et l'éthoxyle), ou un groupe hydroxyle, ou tel que 2 radicaux Rb représentent un groupe dialkoxyle en $C_3$-$C_{18}$.

Dans le cas d'un mélange d'alkoxysilanes polysulfurés répondant à la formule (V) ci-dessus, notamment des mélanges usuels disponibles commercialement, la valeur moyenne des « x » est un nombre fractionnaire de préférence compris dans un domaine allant de 2 à 5, plus préférentiellement proche de 4.

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ commercialisé sous la dénomination « Si69 » par la société Evonik ou le disulfure de bis-(triéthoxysilylpropyle), en abrégé TESPD, de formule $[(C_2H_5O)_3Si(CH_2)_3S]_2$ commercialisé sous la dénomination « Si75 » par la société Evonik. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyle), plus particulièrement le tétrasulfure de bis-monoéthoxydiméthylsilylpropyle tel que décrit dans la demande de brevet WO02/083782-A1 précitée (ou US7217751-B2).

Bien entendu pourraient être également utilisés des mélanges des agents de couplage précédemment décrits.

La teneur en agent de couplage dans la composition de l'invention est avantageusement inférieure ou égale à 25 pce, étant entendu qu'il est en général souhaitable d'en utiliser le moins possible. Typiquement le taux d'agent de couplage représente de 0,5% à 15% en poids par rapport à la quantité de charge inorganique renforçante. Son taux est préférentiellement compris dans un domaine allant de 0,5 à 20 pce, plus préférentiellement compris dans un domaine

allant de 3 à 15 pce. Ce taux est aisément ajusté par l'homme du métier selon le taux de charge inorganique renforçante utilisé dans la composition de l'invention.

Une autre caractéristique essentielle de la composition de caoutchouc de la bande de roulement du pneumatique conforme à l'invention est de comporter un système plastifiant spécifique, comprenant une résine plastifiante hydrocarbonée et un agent plastifiant liquide hydrocarboné, étant entendu que le taux total de résine plastifiante hydrocarbonée et d'agent plastifiant liquide hydrocarboné est supérieur à 10 pce et inférieur ou égal à 80 pce, de préférence supérieur ou égal à 30 pce et inférieur ou égal à 80 pce.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants ou agents tackifiants dans des matrices polymériques. Elles sont par nature au moins partiellement miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De préférence, la résine plastifiante hydrocarbonée a une température de transition vitreuse supérieure à 20°C.

Avantageusement, la résine plastifiante hydrocarbonée présente au moins une quelconque des caractéristiques suivantes, plus préférentiellement toutes :

- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

De préférence, la résine plastifiante hydrocarbonée est choisie dans le groupe constitué par les résines d'homopolymère de cyclopentadiène, les résines de copolymère de cyclopentadiène, les résines d'homopolymère de dicyclopentadiène, les résines de copolymère de dicyclopentadiène, les résines d'homopolymère de terpène, les résines de copolymère de terpène, les résines d'homopolymère de coupe C5, les résines de copolymère de coupe C5, les résines d'homopolymère de coupe C9, les résines de copolymère de coupe C9, les résines hydrogénées d'homopolymère de cyclopentadiène et les résines hydrogénées de copolymère de cyclopentadiène.

De manière plus préférentielle, la résine plastifiante hydrocarbonée est une résine de copolymère de coupe C9 ou une résine de copolymère de dicyclopentadiène, hydrogénée ou non. A titre d'exemple, on peut citer tout particulièrement les résines de copolymères de coupe C9 et de dicyclopentadiène hydrogénée.

Les agents plastifiants liquides hydrocarbonés sont connus pour ramollir une composition de caoutchouc en diluant l'élastomère et la charge renforçante de la composition de caoutchouc. Leur Tg est typiquement inférieure à -20°C, préférentiellement inférieure à - 40°C. Toute huile d'extension hydrocarbonée ou tout agent plastifiant liquide hydrocarboné connu pour ses propriétés plastifiantes vis-à-vis d'élastomères diéniques est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Comme agents plastifiants liquides hydrocarbonés, on peut citer les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, et les mélanges de ces composés.

De préférence, l'agent plastifiant liquide hydrocarboné est choisi dans le groupe constitué par les polymères

diéniques liquides, les huiles polyoléfiniques aliphatiques, les huiles paraffiniques, les huiles MES, les huiles TDAE, les huiles TRAE, les huiles SRAE, les huiles minérales et leurs mélanges. De manière plus préférentielle, l'agent plastifiant liquide hydrocarboné est un polymère diénique liquide, une huile polyoléfine aliphatique, une huile paraffinique, une huile MES ou leurs mélanges.

Selon un mode de réalisation particulier de l'invention, le ratio massique entre le taux de résine plastifiante hydrocarbonée et le taux total de résine plastifiante hydrocarbonée et d'agent plastifiant liquide hydrocarboné est supérieur à 0,4, les taux étant exprimés en pce. Ce mode de réalisation particulier est aussi favorable à l'amélioration du comportement routier d'un pneumatique dont la bande de roulement comprend une telle composition de caoutchouc.

Le système plastifiant peut contenir, généralement en petite quantité, un autre agent plastifiant autre que la résine plastifiante hydrocarbonée et l'agent plastifiant liquide hydrocarboné utiles aux besoins de l'invention, dans la mesure où le compromis de performance recherché ne soit pas altéré. Cet autre agent plastifiant peut être par exemple un agent de mis en oeuvre traditionnellement utilisé en faible quantité pour favoriser par exemple la dispersion de la silice. Selon l'un quelconque des modes de réalisation de l'invention, la résine plastifiante hydrocarbonée et l'agent plastifiant liquide hydrocarboné représentent avantageusement sensiblement l'essentiel du système plastifiant, c'est-à-dire le ratio entre le taux de résine plastifiante hydrocarboné et d'agent plastifiant liquide hydrocarboné sur le taux du système plastifiant total dans la composition de caoutchouc , les taux étant exprimés en pce, est avantageusement supérieur à 0,8, très avantageusement supérieur à 0,9.

Selon une première variante de l'invention, le ratio massique entre le taux de charge renforçante et le taux total de résine plastifiante hydrocarbonée et d'agent plastifiant liquide hydrocarboné est inférieur à 1,2, les taux étant exprimés en pce. La composition de caoutchouc selon la première variante est tout particulièrement appropriée pour une utilisation sous la forme d'une couche constitutive d'une bande de roulement d'un pneumatique, laquelle couche est destinée à entrer au contact de la surface de roulage à l'état neuf du pneumatique. Selon ce mode de réalisation particulier de la première variante, la surface au contact du sol de la bande de roulement s'avère hautement déformable, ce qui est davantage favorable à l'amélioration de la performance d'adhérence en augmentant la surface de contact de la bande de roulement sur le sol de roulage.

Selon une deuxième variante de l'invention, le ratio massique entre le taux de charge renforçante et le taux total de résine plastifiante hydrocarbonée et d'agent plastifiant liquide hydrocarboné est supérieur ou égal à 1,2, les taux étant exprimés en pce. La composition de caoutchouc selon la deuxième variante se prête tout particulièrement pour être utilisée sous la forme d'une couche constitutive d'une bande de roulement, laquelle couche, dite couche intérieure de la bande de roulement, est radialement intérieure à une couche qui est aussi constitutive de la bande de roulement et qui est destinée à entrer au contact du sol à l'état neuf du pneumatique. La couche intérieure de la bande de roulement selon ce mode particulier de la deuxième variante apporte une rigidification au sein de la bande de roulement, ce qui est aussi favorable à l'amélioration du comportement routier d'un pneumatique dont la bande de roulement présente une surface très adhérente en raison de l'utilisation d'une composition de caoutchouc très molle et destinée à entrer au contact du sol.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, un système de réticulation qui peut être à base soit de soufre, soit de donneurs de soufre et/ou de peroxyde et/ou de bismaléimides, des accélérateurs ou retardateurs de vulcanisation, des activateurs de vulcanisation.

Le système de réticulation proprement dit est préférentiellement un système de vulcanisation, c'est-à-dire à base de soufre et d'un accélérateur primaire de vulcanisation. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

La composition de caoutchouc, avant réticulation, peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en oeuvre complémentaires et autres additifs divers, à l'exception du système de réticulation. La durée totale du malaxage, dans cette phase non-productive, est de préférence comprise entre 1 et 15 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (après réticulation ou vulcanisation), peut être un produit semi-fini qui peut être utilisé dans un pneumatique.

Le pneumatique, autre objet de l'invention, qui comprend une composition de caoutchouc conforme à l'invention, comprend de préférence la composition de caoutchouc dans la bande de roulement.

Lorsque le ratio massique entre le taux de charge renforçante et le taux total de résine plastifiante hydrocarbonée et d'agent plastifiant liquide hydrocarboné est inférieur à 1,2, le pneumatique comprend la composition de caoutchouc préférentiellement dans une couche constitutive de la bande de roulement, laquelle couche est destinée à entrer au contact de la surface de roulage à l'état neuf du pneumatique.

Lorsque le ratio massique entre le taux de charge renforçante et le taux total de résine plastifiante hydrocarbonée et d'agent plastifiant liquide hydrocarboné est supérieur ou égal à 1,2, le pneumatique comprend la composition de caoutchouc préférentiellement dans une couche constitutive de la bande de roulement, laquelle couche, dite couche radialement intérieure de la bande de roulement, est radialement intérieure à une couche qui est aussi constitutive de la bande de roulement et qui est destinée à entrer au contact du sol à l'état neuf du pneumatique. La couche dite couche radialement intérieure de la bande de roulement peut aussi être destinée à entrer au contact du sol progressivement lors de l'usure de la bande de roulement.

En résumé, l'invention est mise en oeuvre avantageusement selon l'un quelconque des modes de réalisation suivants 1 à 40 :

Mode 1 : Composition de caoutchouc qui comprend :

- un élastomère qui est un copolymère d'éthylène et d'un 1,3-diène qui comprend des unités éthylène qui représentent plus de 50% en moles des unités monomères du copolymère, le 1,3-diène étant le 1,3-butadiène ou l'isoprène,
- 35 à 100 pce d'une charge renforçante qui comprend une silice,
- un système plastifiant comprenant une résine plastifiante hydrocarbonée et un agent plastifiant liquide hydrocarboné étant entendu que le taux total de résine plastifiante hydrocarbonée et d'agent plastifiant liquide hydrocarboné est supérieur à 10 pce et inférieur ou égal à 80 pce.

Mode 2 : Composition de caoutchouc selon le mode 1 dans laquelle les unités éthylène dans le copolymère représentent plus de 60% en mole des unités monomères du copolymère.

Mode 3 Composition de caoutchouc selon le mode 1 ou le mode 2 dans laquelle les unités éthylène dans le copolymère représentent plus de 70% en mole des unités monomères du copolymère.

Mode 4 : Composition de caoutchouc selon l'un quelconque des modes 1 à 3 dans laquelle le copolymère comprend au plus 90% en mole d'unité éthylène.

Mode 5 : Composition de caoutchouc selon l'un quelconque des modes 1 à 4 dans laquelle le 1,3-diène est le 1,3-butadiène.

Mode 6 : Composition de caoutchouc selon l'un quelconque des modes 1 à 5 dans laquelle le copolymère contient des unités de formule (I).

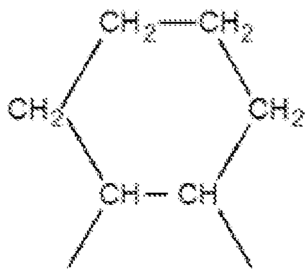

(I)

Mode 7 : Composition de caoutchouc selon l'un quelconque des modes 1 à 6 dans laquelle le copolymère contient des unités de formule (II-1) ou (II-2).

$-CH_2-CH(CH=CH_2)-$ (II-1)

$-CH_2-CH(\underline{CMe}=CH_2)$ (II-2)

Mode 8 : Composition de caoutchouc selon l'un quelconque des modes 1 à 7 dans laquelle le copolymère contient des unités de formule (I) et de formule (II-1).

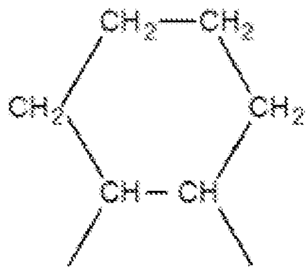

(I)

$-CH_2-CH(CH=CH_2)-$ (II-1)

Mode 9 : Composition de caoutchouc selon l'un quelconque des modes 1 à 8 dans laquelle le copolymère contient des unités de formule $-CH_2-CH=CH-CH_2-$ lorsque le 1,3-diène est le 1,3-butadiène ou de formule $-CH_2-CMe=C-CH_2-$ lorsque le 1,3-diène est l'isoprène.

Mode 10 : Composition de caoutchouc selon l'un quelconque des modes 1 à 9 dans laquelle les pourcentages molaires des unités de formule (I) et des unités de formule (II-1) dans le copolymère, respectivement o et p, satisfont à l'équation suivante (eq. 1), o et p étant calculés sur la base de l'ensemble des unités monomères du copolymère.

$$0 < o+p \leq 25 \text{ (eq. 1)}$$

Mode 11 : Composition de caoutchouc selon l'un quelconque des modes 1 à 10 dans laquelle les pourcentages molaires des unités de formule (I) et des unités de formule (II-1) dans le copolymère, respectivement o et p, satisfont à l'équation suivante (eq. 2), o et p étant calculés sur la base de l'ensemble des unités monomères du copolymère.

$$0 < o+p < 20 \text{ (eq. 2)}$$

Mode 12 : Composition de caoutchouc selon l'un quelconque des modes 1 à 11 dans laquelle le copolymère est statistique.

Mode 13 : Composition de caoutchouc selon l'un quelconque des modes 1 à 12 dans laquelle le copolymère d'éthylène et d'un 1,3-diène porte en extrémité de chaîne un groupe fonctionnel $F^1$ qui est une fonction silanol ou alcoxysilane.

Mode 14 : Composition de caoutchouc selon le mode 13 dans laquelle la fonction alcoxysilane ou silanol est attachée directement par une liaison covalente à l'unité terminale de l'élastomère diénique fortement saturé.

Mode 15 : Composition de caoutchouc selon le mode 13 ou 14 dans laquelle le groupe fonctionnel $F^1$ est de formule (III-a)

$$Si(OR^1)_{3-f}(R^2)_f \qquad \text{(III-a)}$$

les symboles $R^1$, identiques ou différents, représentant un alkyle,

les symboles $R^2$, identiques ou différents, représentant un atome d'hydrogène, une chaîne hydrocarbonée ou une chaîne hydrocarbonée substituée par une fonction chimique $F^2$,
f étant un nombre entier allant de 0 à 2.

Mode 16 : Composition de caoutchouc selon le mode 13 ou 14 dans laquelle le groupe fonctionnel $F^1$ est de formule (III-b)

$$Si(OH)(R^2)_2, \qquad \text{(III-b)}$$

les symboles $R^2$, identiques ou différents, représentant un atome d'hydrogène, une chaîne hydrocarbonée ou une chaîne hydrocarbonée substituée par une fonction chimique $F^2$.

Mode 17 : Composition de caoutchouc selon le mode 16 dans laquelle la fonction chimique $F^2$ est une fonction amine primaire, secondaire, tertiaire ou une fonction thiol, la fonction amine primaire, secondaire ou thiol étant protégée ou non par un groupe protecteur.

Mode 18 : Composition de caoutchouc selon l'un quelconque des modes 15 à 17 dans laquelle les symboles $R^1$ sont un méthyle ou un éthyle, les symboles symboles $R^2$ sont un méthyle ou un éthyle ou propanediyle portant la fonction chimique $F^2$.

Mode 19 : Composition de caoutchouc selon l'un quelconque des modes 1 à 18 dans laquelle le taux du copolymère d'éthylène et d'un 1,3-diène est supérieur à 50 pce

Mode 20 : Composition de caoutchouc selon l'un quelconque des modes 1 à 19 dans laquelle le taux du copolymère d'éthylène et d'un 1,3-diène est supérieur à 80 pce.

Mode 21 : Composition de caoutchouc selon l'un quelconque des modes 1 à 20 dans laquelle la silice représente plus de 50% en masse de la charge renforçante.

Mode 22 : Composition de caoutchouc selon l'un quelconque des modes 1 à 21 dans laquelle la silice représente plus de 85% en masse de la charge renforçante.

Mode 23 : Composition de caoutchouc selon l'un quelconque des modes 1 à 22, laquelle composition de caoutchouc comprend un agent de couplage.

Mode 24 : Composition de caoutchouc selon l'un quelconque des modes 1 à 23 dans laquelle le taux de charge renforçante est supérieur ou égal à 50 pce et inférieur ou égal à 100 pce.

Mode 25 : Composition de caoutchouc selon l'un quelconque des modes 1 à 24 dans laquelle le taux de noir de carbone est inférieur ou égal à 10 pce.

Mode 26 : Composition de caoutchouc selon le mode 25 dans laquelle le taux de noir de carbone est inférieur ou égal à 5 pce.

Mode 27 : Composition de caoutchouc selon l'un quelconque des modes 1 à 26 dans laquelle le taux total de résine plastifiante hydrocarbonée et d'agent plastifiant liquide hydrocarboné est supérieur ou égal à 30 pce et inférieur ou égal à 80 pce.

Mode 28 : Composition de caoutchouc selon l'un quelconque des modes 1 à 27 dans laquelle la résine plastifiante hydrocarbonée a une température de transition vitreuse supérieure à 20°C.

Mode 29 : Composition de caoutchouc selon l'un quelconque des modes 1 à 28 dans laquelle la résine plastifiante hydrocarbonée est choisie dans le groupe constitué par les résines d'homopolymère de cyclopentadiène, les résines de copolymère de cyclopentadiène, les résines d'homopolymère de dicyclopentadiène, les résines de copolymère de dicyclopentadiène, les résines d'homopolymère de terpène, les résines de copolymère de terpène, les résines d'homopolymère de coupe C5, les résines de copolymère de coupe C5, les résines d'homopolymère de coupe C9, les résines de copolymère de coupe C9, les résines hydrogénées d'homopolymère de cyclopentadiène et les résines hydrogénées de copolymère de cyclopentadiène.

Mode 30 : Composition de caoutchouc selon l'un quelconque des modes 1 à 29 dans laquelle la résine plastifiante hydrocarbonée est une résine de copolymère de coupe C9 ou une résine de copolymère de dicyclopentadiène, hydrogénée ou non, par exemple une résine de copolymère de coupe C9 et de dicyclopentadiène hydrogénée.

Mode 31 : Composition de caoutchouc selon l'un quelconque des modes 1 à 30 dans laquelle l'agent plastifiant liquide hydrocarboné est choisi dans le groupe constitué par les polymères diéniques liquides, les huiles polyoléfiniques aliphatiques, les huiles paraffiniques, les huiles MES, les huiles TDAE, les huiles TRAE, les huiles SRAE, les huiles minérales et leurs mélanges.

Mode 32 : Composition de caoutchouc selon l'un quelconque des modes 1 à 31 dans laquelle l'agent plastifiant liquide hydrocarboné est un polymère diénique liquide, une huile polyoléfine aliphatique, une huile paraffinique, une huile MES ou leurs mélanges.

Mode 33 : Composition de caoutchouc selon l'un quelconque des modes 1 à 33 dans laquelle le ratio massique entre le taux de résine plastifiante hydrocarbonée et le taux total de résine plastifiante hydrocarbonée et d'agent plastifiant liquide hydrocarboné est supérieur à 0,4.

Mode 34 : Composition de caoutchouc selon l'un quelconque des modes 1 à 3, laquelle composition comporte un système de réticulation.

Mode 35 : Composition de caoutchouc selon le mode 34 dans laquelle le système de réticulation est un système de vulcanisation.

Mode 36 : Composition de caoutchouc selon l'un quelconque des modes 1 à 35 dans laquelle le ratio massique entre le taux de charge renforçante et le taux total de résine plastifiante hydrocarbonée et d'agent plastifiant liquide hydrocarboné est inférieur à 1,2.

Mode 37 : Composition de caoutchouc selon l'un quelconque des modes 1 à 36 dans laquelle le ratio massique entre le taux de charge renforçante et le taux total de résine plastifiante hydrocarbonée et d'agent plastifiant liquide hydrocarboné est supérieur ou égal à 1,2.

Mode 38 : Pneumatique comportant un sommet prolongé par deux flancs et deux bourrelets, une armature de carcasse ancrée dans les deux bourrelets, une armature de sommet et une bande de roulement radialement extérieure à ladite armature de sommet, lequel pneumatique comprend une composition de caoutchouc définie à l'un quelconque des modes 1 à 37 dans la bande de roulement.

Mode 39 : Pneumatique selon le mode 38 et selon le mode 36, lequel pneumatique comprend la composition de caoutchouc dans une couche constitutive de la bande de roulement, laquelle couche est destinée à entrer au contact de la surface de roulage à l'état neuf du pneumatique.

Mode 40 : Pneumatique selon le mode 38 et selon le mode 37, lequel pneumatique comprend la composition de caoutchouc dans une couche constitutive de la bande de roulement, laquelle couche est radialement intérieure à une couche qui est aussi constitutive de la bande de roulement et qui est destinée à entrer au contact du sol à l'état neuf du pneumatique.

Les caractéristiques précitées de la présente invention, ainsi que d'autres, seront mieux comprises à la lecture de la description suivante de plusieurs exemples de réalisation de l'invention, donnés à titre illustratif et non limitatif.

**Exemple**

II.1 Tests et mesures :

II.1-1 Détermination de la microstructure des élastomères :

La microstructure des élastomères est déterminée par analyse RMN $^1H$, supplée par l'analyse RMN $^{13}C$ lorsque la résolution des spectres RMN du $^1H$ ne permet pas l'attribution et la quantification de toutes les espèces. Les mesures sont réalisées à l'aide d'un spectromètre RMN BRUKER 500MHz à des fréquences de 500,43 MHz pour l'observation du proton et 125,83MHz pour l'observation du carbone.
Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.
Pour les mesures sur des élastomères solubles, est utilisée une sonde RMN liquide permettant d'observer le proton et le carbone en mode découplé du proton.
La préparation des échantillons non solubles est faite dans des rotors remplis avec le matériau analysé et un solvant deutéré permettant le gonflement, en général du chloroforme deutéré ($CDCl_3$). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré ($CDCl_3$). Le solvant ou coupage de solvant utilisé doit toujours être deutéré et sa nature chimique peut être adaptée par l'homme du métier.
Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.
Les mesures de RMN sont réalisées à 25°C.

II.1-2 Détermination de la viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney est exprimée en "unité Mooney" (UM, avec 1 UM=0,83 Newton.mètre).

11.1-3 Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% (cycle aller), puis de 50% à 0,1% (cycle retour). Les résultats exploités sont le module complexe de cisaillement G* à 10%, le facteur de perte tan(δ). Pour le cycle retour, on indique la valeur

maximale de tan(δ) observée, notée tan(δ)max ainsi que la valeur de G* à 10%.

On enregistre aussi la réponse d'un échantillon de composition vulcanisée soumis à une sollicitation sinusoïdale en cisaillement simple alterné à contrainte imposée de 0,7 MPa et à une fréquence de 10 Hz, lors d'un balayage en température, d'une température minimale inférieure à la Tg des élastomères des compositions jusqu'à une température maximale supérieure à 100°C ; les valeurs de G* sont prises à la température de 60°C.

II.2 Préparation des compositions de caoutchouc :

Sept compositions de caoutchouc C1 à C7 dont le détail de la formulation figure dans le tableau 1, ont été préparées de la manière suivante :

On introduit dans un mélangeur interne (taux de remplissage final : environ 70% en volume), dont la température initiale de cuve est d'environ 80°C, successivement les élastomères, la charge renforçante ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées pour former par exemple un profilé pour un pneumatique

Les sept compositions de caoutchouc C1 à C7 contiennent toutes un copolymère d'éthylène et de 1,3-butadiène dans lequel le taux d'unité éthylène est supérieur à 50%. Dans les compositions C5 à C7, le copolymère porte une fonction silanol ou alcoxysilane en extrémité de chaîne.

Le copolymère d'éthylène et de 1,3-butadiène (EBR) est préparé selon le mode opératoire suivant :

Dans un réacteur contenant du méthylcyclohexane, on ajoute le co-catalyseur, le butyloctylmagnésium (BOMAG) (0,00021 mol/L) puis le métallocène $[\{Me_2SiFlu_2Nd(\mu\text{-}BH_4)_2Li(THF)\}_2]$ (0,07 mol/L), le symbole Flu représentant le groupe $C_{13}H_8$. La durée d'alkylation est de 10 minutes, la température de réaction est de 20 °C. Ensuite, les monomères sous la forme d'un mélange gazeux de composition molaire éthylène/1,3-butadiène : 80/20 sont ajoutés de manière continue. La polymérisation est conduite dans des conditions de température et de pression constante 80°C et 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Dans le copolymère EBR, le taux molaire en unité éthylène est de 79%, le taux molaire en unité 1,4 est de 6%, le taux molaire en unité 1,2 est de 8%, le taux molaire en unité 1,2-cyclohexanediyle est de 7%. La viscosité Mooney est de 85.

Pour le copolymère EBR-F utilisé dans la composition de caoutchouc C5 à C7, le copolymère est préparé selon le même opératoire que le copolymère EBR à la différence près qui est la suivante :

Lorsque la conversion en monomères souhaitée est atteinte, le contenu du réacteur est dégazé puis l'agent de fonctionnalisation, le (N,N-diméthyl-3-aminopropyl)méthyldiméthoxysilane, est introduit sous atmosphère inerte par surpression. Le milieu réactionnel est agité pendant un temps de 15 minutes et une température de 80°C. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé, puis séché à 60°C sous vide jusqu'à masse constante.

Dans le copolymère EBRF, le taux molaire en unité éthylène est de 76%, le taux molaire en unité 1,4 est de 6%, le taux molaire en unité 1,2 est de 9%, le taux molaire en unité 1,2-cyclohexanediyle est de 9%. La viscosité Mooney est de 84.

Tableau 1

| Composition | C1 | C2 | C3 | C4 | C5 | C6 | C7 |
|---|---|---|---|---|---|---|---|
| EBR | 100 | 100 | 100 | 100 | | | |
| EBR-F | | | | | 100 | 100 | 100 |
| Noir de carbone (1) | 3 | 3 | 3 | 3 | 3 | 3 | 3 |
| Silice (2) | 75 | 91 | 83 | 63 | 63 | 75 | 75 |
| Agent plastifiant liquide (3) | 38 | 26 | 20 | 10 | 23 | 38 | 22 |

(suite)

| Composition | C1 | C2 | C3 | C4 | C5 | C6 | C7 |
|---|---|---|---|---|---|---|---|
| Résine plastifiante (4) | 32 | 31 | 23 | 25 | 23 | 32 | 51 |
| Antioxydant (5) | 2 | 2 | 2 | 2 | 2 | 2 | 2 |
| Cire antiozonante | 1,6 | 1,6 | 1,6 | 1,6 | 1,6 | 1,6 | 1,6 |
| Agent de couplage (6) | 6 | 7 | 7 | 5 | 5 | 6 | 6 |
| Acide stéarique (7) | 2 | 2 | 2 | 2 | 2 | 2 | 2 |
| DPG (8) | 1,5 | 1,8 | 1,5 | 1,2 | 1,2 | 1,5 | 1,5 |
| ZnO (9) | 1 | 1 | 1 | 1 | 1 | 1 | 1 |
| CBS (10) | 2 | 2 | 2 | 2 | | 2 | 2 |
| Soufre | 1 | 1 | 1 | 1 | 1,6 | 1 | 1 |
| TBzTD (11) | | | | | 2 | | |
| Ratio (12) | 1,1 | 1,6 | 2,0 | 1,9 | 1,4 | 1,1 | 1,0 |
| Ratio (13) | 0,46 | 0,54 | 0,53 | 0,71 | 0,50 | 0,46 | 0,67 |
| Tanδ max 23°C | 0,31 | 0,40 | 0,38 | 0,29 | 0,18 | 0,25 | 0,30 |
| G* 10%, 23°C (MPa) | 2,5 | 3,7 | 4,6 | 3,2 | 1,9 | 1,9 | 2,0 |
| G* 60°C 0.7 MPa | 1,2 | 1,7 | 2,4 | 1,7 | 1,3 | 1 | 1 |
| (MPa) | | | | | | | |

(1) N234
(2) "Zeosil 1165 MP" de Solvay-Rhodia sous forme de microperles
(3) MES/HPD (Catenex SNR de Shell)
(4) Résine hydrocarbonée C9/Dicyclopentadiène «Escorez 5600» de la société EXXON (Tg = 55°C)
(5) N-1,3-diméthylbutyl-N-phényl-para-phenyldiamine (« Santoflex 6-PPD » de Flexsys)
(6) TESPT ("Si69" de Evonik)
(7) Stéarine « Pristerene 4931 » de Uniquema
(8) Diphénylguanidine
(9) Oxyde de Zinc de grade industriel de Umicore
(10) N-cyclohexyl-2-benzothiazol-sulfénamide (« Santocure CBS » de Flexsys)
(11) Disulfure de tétrabenzylthiurame ("Perkacit TBZTD" de Flexsys)
(12) Ratio massique entre le taux de charge renforçante et le taux total de résine plastifiante hydrocarbonée et d'agent plastifiant liquide hydrocarboné
(13) Ratio massique entre le taux de résine plastifiante hydrocarbonée et le taux total de résine plastifiante hydrocarbonée et d'agent plastifiant liquide hydrocarboné.

## Revendications

**1.** Composition de caoutchouc qui comprend :

- un élastomère qui est un copolymère d'éthylène et d'un 1,3-diène qui comprend des unités éthylène qui représentent plus de 50% en moles des unités monomères du copolymère, le 1,3-diène étant le 1,3-butadiène ou l'isoprène,
- 35 à 100 pce d'une charge renforçante qui comprend une silice,
- un système plastifiant comprenant une résine plastifiante hydrocarbonée et un agent plastifiant liquide hydrocarboné, étant entendu que le taux total de résine plastifiante hydrocarbonée et d'agent plastifiant liquide hydrocarboné est supérieur à 10 pce et inférieur ou égal à 80 pce.

**2.** Composition de caoutchouc selon la revendication 1 dans laquelle les unités éthylène dans le copolymère représentent plus de 60%, de préférence plus de 70% en mole des unités monomères du copolymère.

**3.** Composition de caoutchouc selon l'une quelconque des revendications 1 à 2 dans laquelle le copolymère contient des unités de formule (I) ou bien contient des unités de formule (II-1) ou (II-2) ou encore contient des unités de formule (I) et de formule (II-1).

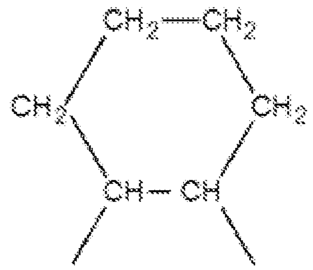

(I)

$-CH_2-CH(CH=CH_2)-$ (II-1)

$-CH_2-CH(\underline{CMe}=CH_2)-$ (II-2))

**4.** Composition de caoutchouc selon la revendication 3 dans laquelle les pourcentages molaires des unités de formule (I) et des unités de formule (II-1) dans le copolymère, respectivement o et p, satisfont à l'équation suivante (eq. 1), de manière préférentielle à l'équation (eq. 2), o et p étant calculés sur la base de l'ensemble des unités monomères du copolymère.

$$0 < o+p \leq 25 \text{ (eq. 1)}$$

$$0 < o+p < 20 \text{ (eq. 2)}$$

**5.** Composition de caoutchouc selon l'une quelconque des revendications 1 à 4 dans laquelle le copolymère est statistique.

**6.** Composition de caoutchouc selon l'une quelconque des revendications 1 à 5 dans laquelle le copolymère d'éthylène et d'un 1,3-diène porte en extrémité de chaîne un groupe fonctionnel $F^1$ qui est une fonction silanol ou alcoxysilane.

**7.** Composition de caoutchouc selon l'une quelconque des revendications 1 à 6 dans laquelle le taux du copolymère d'éthylène et d'un 1,3-diène est supérieur à 50 pce, de préférence supérieure à 80 pce.

**8.** Composition de caoutchouc selon l'une quelconque des revendications 1 à 7 dans laquelle la silice représente plus de 50% en masse de la charge renforçante, préférentiellement plus de 85% en masse de la charge renforçante.

**9.** Composition de caoutchouc selon l'une quelconque des revendications 1 à 8 dans laquelle la résine plastifiante hydrocarbonée a une température de transition vitreuse supérieure à 20°C.

**10.** Composition de caoutchouc selon l'une quelconque des revendications 1 à 9 dans laquelle la résine plastifiante hydrocarbonée est choisie dans le groupe constitué par les résines d'homopolymère de cyclopentadiène, les résines de copolymère de cyclopentadiène, les résines d'homopolymère de dicyclopentadiène, les résines de copolymère de dicyclopentadiène, les résines d'homopolymère de terpène, les résines de copolymère de terpène, les résines d'homopolymère de coupe C5, les résines de copolymère de coupe C5, les résines d'homopolymère de coupe C9, les résines de copolymère de coupe C9, les résines hydrogénées d'homopolymère de cyclopentadiène et les résines hydrogénées de copolymère de cyclopentadiène, de préference une résine de copolymère de coupe C9 ou une résine de copolymère de dicyclopentadiène, hydrogénée ou non.

**11.** Composition de caoutchouc selon l'une quelconque des revendications 1 à 10 dans laquelle l'agent plastifiant liquide hydrocarboné est choisi dans le groupe constitué par les polymères diéniques liquides, les huiles polyoléfiniques aliphatiques, les huiles paraffiniques, les huiles MES, les huiles TDAE, les huiles RAE, les huiles TRAE, les huiles SRAE, les huiles minérales et leurs mélanges, de préférence un polymère diénique liquide, une huile polyoléfine aliphatique, une huile paraffinique ou une huile MES.

**12.** Composition de caoutchouc selon l'une quelconque des revendications 1 à 11 dans laquelle le ratio massique entre le taux de résine plastifiante hydrocarbonée et le taux total de résine plastifiante hydrocarbonée et d'agent plastifiant liquide hydrocarboné est supérieur à 0,4.

**13.** Composition de caoutchouc selon l'une quelconque des revendications 1 à 12 dans laquelle le ratio massique entre le taux de charge renforçante et le taux total de résine plastifiante hydrocarbonée et d'agent plastifiant liquide hydrocarboné est inférieur à 1,2.

**14.** Composition de caoutchouc selon l'une quelconque des revendications 1 à 12 dans laquelle le ratio massique entre le taux de charge renforçante et le taux total de résine plastifiante hydrocarbonée et d'agent plastifiant liquide hydrocarboné est supérieur ou égal à 1,2.

**15.** Pneumatique comportant un sommet prolongé par deux flancs et deux bourrelets, une armature de carcasse ancrée dans les deux bourrelets, une armature de sommet et une bande de roulement radialement extérieure à ladite armature de sommet, lequel pneumatique comprend une composition de caoutchouc, définie à l'une quelconque des revendications 1 à 14, dans la bande de roulement.

## Patentansprüche

**1.** Kautschukzusammensetzung, die Folgendes umfasst:

- ein Elastomer, bei dem es sich um ein Copolymer von Ethylen und einem 1,3-Dien handelt, das Ethylen-Einheiten umfasst, die mehr als 50 Mol-% der Monomereinheiten des Copolymers ausmachen, wobei es sich bei dem 1,3-Dien um 1,3-Butadien oder Isopren handelt,
- 35 bis 100 phe eines verstärkenden Füllstoffs, der eine Kieselsäure umfasst,
- ein Weichmachersystem, umfassend ein Kohlenwasserstoff-Weichmacherharz und einen flüssigen Kohlenwasserstoff-Weichmacher, mit der Maßgabe, dass der Gesamtgehalt an Kohlenwasserstoff-Weichmacherharz und flüssigem Kohlenwasserstoff-Weichmacher größer als 10 phe und kleiner oder gleich 80 phe ist.

**2.** Kautschukzusammensetzung nach Anspruch 1, wobei die Ethylen-Einheiten in dem Copolymer mehr als 60 Mol-%, vorzugsweise mehr als 70 Mol-%, der Monomereinheiten des Copolymers ausmachen.

**3.** Kautschukzusammensetzung nach einem der Ansprüche 1 bis 2, wobei das Copolymer Einheiten der Formel (I) enthält oder auch Einheiten der Formel (II-1) oder (II-2) enthält oder auch Einheiten der Formel (I) und der Formel (II-1) enthält.

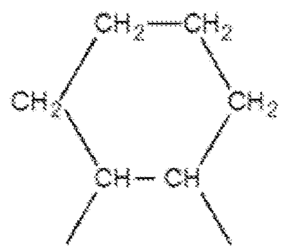

(I)

$-CH_2-CH(CH=CH_2)-$ (II-1)

$-CH_2-CH(\underline{CMe}=CH_2)-$ (II-2))

**4.** Kautschukzusammensetzung nach Anspruch 3, wobei die Molprozentanteile der Einheiten der Formel (I) und der Einheiten der Formel (II-1) in dem Copolymer, o bzw. p, die folgende Gleichung (Gl. 1), vorzugsweise die Gleichung (Gl. 2), erfüllen, wobei o und p auf der Basis aller Monomereinheiten des Copolymers berechnet werden.

$$0 < o + p \leq 25 \text{ (Gl. 1)}$$

$$0 < o + p \leq 20 \text{ (Gl. 2)}$$

**5.** Kautschukzusammensetzung nach einem der Ansprüche 1 bis 4, wobei das Copolymer statistisch ist.

**6.** Kautschukzusammensetzung nach einem der Ansprüche 1 bis 5, wobei das Copolymer von Ethylen und einem 1,3-Dien am Kettenende eine funktionelle Gruppe $F^1$ trägt, bei der es sich um eine Silanol- oder Alkoxysilan-Funktion handelt.

**7.** Kautschukzusammensetzung nach einem der Ansprüche 1 bis 6, wobei der Gehalt des Copolymers von Ethylen und einem 1,3-Dien größer als 50 phe, vorzugsweise größer als 80 phe, ist.

**8.** Kautschukzusammensetzung nach einem der Ansprüche 1 bis 7, wobei die Kieselsäure mehr als 50 Massen-% des verstärkenden Füllstoffs, bevorzugt mehr als 85 Massen-% des verstärkenden Füllstoffs, ausmacht.

**9.** Kautschukzusammensetzung nach einem der Ansprüche 1 bis 8, wobei das Kohlenwasserstoff-Weichmacherharz eine Glasübergangstemperatur von mehr als 20 °C aufweist.

**10.** Kautschukzusammensetzung nach einem der Ansprüche 1 bis 9, wobei das Kohlenwasserstoff-Weichmacherharz aus der Gruppe bestehend aus Cyclopentadien-Homopolymerharzen, Cyclopentadien-Copolymerharzen, Dicyclopentadien-Homopolymerharzen, Dicyclopentadien-Copolymerharzen, Terpen-Homopolymerharzen, Terpen-Copolymerharzen, C5-Schnitt-Homopolymerharzen, C5-Schnitt-Copolymerharzen, C9-Schnitt-Homopolymerharzen, C9-Schnitt-Copolymerharzen, hydrierten Cyclopentadien-Homopolymerharzen und hydrierten Cyclopentadien-Copolymerharzen, bevorzugt einem C9-Schnitt-Copolymerharz oder einem hydrierten oder nicht hydrierten Dicyclopentadien-Copolymerharz, ausgewählt ist.

**11.** Kautschukzusammensetzung nach einem der Ansprüche 1 bis 10, wobei der flüssige Kohlenwasserstoff-Weichmacher aus der Gruppe bestehend aus flüssigen Dienpolymeren, aliphatischen Polyolefinölen, Paraffinölen, MES-Ölen, TDAE-Ölen, RAE-Ölen, TRAE-Ölen, SRAE-Ölen, Mineralölen und Mischungen davon, bevorzugt einem flüssigen Dienpolymer, einem aliphatischen Polyolefinöl, einem Paraffinöl oder einem MES-Öl, ausgewählt ist.

**12.** Kautschukzusammensetzung nach einem der Ansprüche 1 bis 11, wobei das Massenverhältnis zwischen dem Gehalt an Kohlenwasserstoff-Weichmacherharz und dem Gesamtgehalt an Kohlenwasserstoff-Weichmacherharz und flüssigem Kohlenwasserstoff-Weichmacher größer als 0,4 ist.

**13.** Kautschukzusammensetzung nach einem der Ansprüche 1 bis 12, wobei das Massenverhältnis zwischen dem Gehalt an verstärkendem Füllstoff und dem Gesamtgehalt an Kohlenwasserstoff-Weichmacherharz und flüssigem Kohlenwasserstoff-Weichmacher kleiner als 1,2 ist.

**14.** Kautschukzusammensetzung nach einem der Ansprüche 1 bis 12, wobei das Massenverhältnis zwischen dem Gehalt an verstärkendem Füllstoff und dem Gesamtgehalt an Kohlenwasserstoff-Weichmacherharz und flüssigem Kohlenwasserstoff-Weichmacher größer oder gleich 1,2 ist.

**15.** Reifen, umfassend einen durch zwei Seitenwände und zwei Wülste verlängerten Scheitel, eine in den beiden Wülsten verankerte Karkassenbewehrung, eine Scheitelbewehrung und eine Lauffläche radial außerhalb der Scheitelbewehrung, wobei der Reifen in der Lauffläche eine Kautschukzusammensetzung gemäß einem der Ansprüche 1 bis 14 umfasst.

## Claims

**1.** Rubber composition which comprises:

- an elastomer which is a copolymer of ethylene and of a 1,3-diene which comprises ethylene units which represent more than 50 mol% of the monomer units of the copolymer, the 1,3-diene being 1,3-butadiene or isoprene,
- 35 to 100 phr of a reinforcing filler which comprises a silica,
- a plasticizing system comprising a plasticizing hydrocarbon resin and a liquid hydrocarbon plasticizing agent,

it being understood that the total content of hydrocarbon plasticizing resin and of liquid hydrocarbon plasticizing agent is greater than 10 phr and less than or equal to 80 phr.

**2.** Rubber composition according to Claim 1, in which the ethylene units in the copolymer represent more than 60 mol%, preferably more than 70 mol% of the monomer units of the copolymer.

**3.** Rubber composition according to either one of Claims 1 and 2, in which the copolymer contains units of formula (I) or indeed contains units of formula (II-1) or (II-2) or else contains units of formula (I) and of formula (II-1).

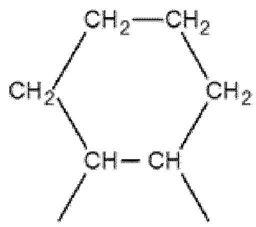

(I)

$-CH_2-CH(CH=CH_2)-$ (II-1)

$-CH_2-CH(\underline{CMe}=CH_2)-$ (II-2))

**4.** Rubber composition according to Claim 3, in which the molar percentages of the units of formula (I) and of the units of formula (II-1) in the copolymer, respectively o and p, satisfy the following equation (eq. 1), preferentially satisfy the equation (eq. 2), o and p being calculated on the basis of all the monomer units of the copolymer.

$$0 < o+p \leq 25 \text{ (eq. 1)}$$

$$0 < o+p < 20 \text{ (eq. 2)}$$

**5.** Rubber composition according to any one of Claims 1 to 4, in which the copolymer is a statistical copolymer.

**6.** Rubber composition according to any one of Claims 1 to 5, in which the copolymer of ethylene and of a 1,3-diene bears at the chain end a functional group $F^1$ which is a silanol or alkoxysilane function.

**7.** Rubber composition according to any one of Claims 1 to 6, in which the content of the copolymer of ethylene and of a 1,3-diene is greater than 50 phr, preferably greater than 80 phr.

**8.** Rubber composition according to any one of Claims 1 to 7, in which the silica represents more than 50% by weight of the reinforcing filler, preferentially more than 85% by weight of the reinforcing filler.

**9.** Rubber composition according to any one of Claims 1 to 8, in which the hydrocarbon plasticizing resin has a glass transition temperature of greater than 20°C.

**10.** Rubber composition according to any one of Claims 1 to 9, in which the hydrocarbon plasticizing resin is selected from the group consisting of cyclopentadiene homopolymer resins, cyclopentadiene copolymer resins, dicyclopentadiene homopolymer resins, dicyclopentadiene copolymer resins, terpene homopolymer resins, terpene copolymer resins, C5-cut homopolymer resins, C5-cut copolymer resins, C9-cut homopolymer resins, C9-cut copolymer resins, hydrogenated cyclopentadiene homopolymer resins and hydrogenated cyclopentadiene copolymer resins, preferably a C9-cut copolymer resin or a dicyclopentadiene copolymer resin, which is hydrogenated or non-hydrogenated.

**11.** Rubber composition according to any one of Claims 1 to 10, in which the hydrocarbon liquid plasticizing agent is selected from the group consisting of liquid diene polymers, aliphatic polyolefin oils, paraffinic oils, MES oils, TDAE oils, RAE oils, TRAE oils, SRAE oils, mineral oils and mixtures thereof, preferably a liquid diene polymer, an aliphatic polyolefin oil, a paraffinic oil or an MES oil.

**12.** Rubber composition according to any one of Claims 1 to 11, in which the weight ratio between the content of hydrocarbon plasticizing resin and the total content of hydrocarbon plasticizing resin and of hydrocarbon liquid plasticizing agent is greater than 0.4.

**13.** Rubber composition according to any one of Claims 1 to 12, in which the weight ratio between the content of reinforcing filler and the total content of hydrocarbon plasticizing resin and of hydrocarbon liquid plasticizing agent is less than 1.2.

**14.** Rubber composition according to any one of Claims 1 to 12, in which the weight ratio between the content of reinforcing filler and the total content of hydrocarbon plasticizing resin and of hydrocarbon liquid plasticizing agent is greater than or equal to 1.2.

**15.** Tyre comprising a crown extended by two sidewalls and two beads, a carcass reinforcement anchored in the two beads, a crown reinforcement and a tread radially outside said crown reinforcement, which tyre comprises a rubber composition defined in any one of Claims 1 to 14 in the tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- WO 0210269 A
- WO 2012084599 A
- JP 2013185048 A
- EP 1092731 A
- WO 2004035639 A
- WO 2007054223 A
- WO 2007054224 A
- WO 2017093654 A1
- WO 2018020122 A1
- WO 2018020123 A1
- FR 2018051305 W
- FR 2018051306 W
- WO 03016215 A1
- WO 03016387 A1
- WO 03002648 A1
- US 2005016651 A1
- WO 03002649 A1
- US 2005016650 A1
- WO 02083782 A1
- US 7217751 B2


### Littérature non-brevet citée dans la description


- **BRUNAUER-EMMETT-TELLER.** *The Journal of the American Chemical Society,* Février 1938, vol. 60, 309
- **DE R. MILDENBERG ; M. ZANDER ; G. COLLIN.** Hydrocarbon Resins. VCH, 1997